# EUROPÄISCHE PATENTANMELDUNG

(11) **EP 1 261 165 A1**
(43) Veröffentlichungstag der Anmeldung: **27.11.2002**
(21) Anmeldenummer: 01111792.6
(22) Anmeldetag: 15.05.2001
(51) Int. Cl.: H04L 9/32

(54) **Signaturverfahren**

(71) Anmelder: SIEMENS AKTIENGESELLSCHAFT, 80333 München (DE)
(72) Erfinder: Kaijser, Per, Dr., 85737 Ismaning (DE); Markwitz, Wernhard, Dr., 80469 München (DE)

(57) **Zusammenfassung**

Die Erfindung betrifft ein Signaturverfahren, mit einem Personalcomputer und einem Mobilfunkgerät, die beide an einem Kommunikationsnetz angeschaltet sind, bei dem für ein Dokument am Personalcomputer oder im Netz ein Hash-Wert gebildet, dieser zum Mobilfunkgerät übertragen, dort signiert und diese Signatur zum Personalcomputer zurück übertragen wird.

## Beschreibung

Die Erfindung betrifft ein Signaturverfahren mit einem Personalcomputer und einem Mobilfunkgerät, die beide an ein Kommunikationsnetz angeschaltet sind.

Mit einem solchen Signaturverfahren werden elektronische Signaturen für e-commerce, e-government usw. sicher erzeugt. Signiert wird beispielsweise ein Dokument von einer Person, die es geschrieben hat. Im allgemeinen wird dabei für das Dokument, beziehungsweise für den Inhalt desselben ein Hash-Wert erzeugt, der mit einem geheimen Schlüssel der Person verschlüsselt wird. Der geheime Schlüssel sowie ein zugehöriger öffentlicher Schlüssel der Person sind Teile des Public-Key-Systems. Der Empfänger des Dokumentes kann durch Entschlüsselung der Signatur mit dem öffentlichen Schlüssel der Person verifizieren, dass diese Person das entsprechende Dokument signiert beziehungsweise unterzeichnet hat.

Zur Realisierung der Signatur ist ein vertrauenswürdiger Signatur-Server denkbar, der im Auftrag des Nutzers beziehungsweise der Person die Erzeugung einer qualifizierten digitalen Signatur vornimmt. Eine weitere Möglichkeit besteht in der Verwendung eines mobilen Endgerätes, beispielsweise eines Mobilfunkgerätes, zur Erzeugung der Signatur. Hierbei wird ein Dokument mit Text, oder eine Tabelle am Mobilfunkgerät eingegeben, über die sogenannte SIM-Karte (Subscriber Identifikation Module) dieses Dokument signiert und an einen Kommunikationsteilnehmer abgeschickt. Der Benutzer muss bei der Eingabe der Daten am Mobilfunkgerät starke Einschränkungen hinsichtlich der Bearbeitung und Darstellung hinnehmen.

Bei der Verwendung eines Personal Computers wird für das Signaturverfahren beispielsweise ein Smart-Card-Leser verwendet. Bei der Erzeugung der Signatur wird die Smart Card über die Eingabe einer PIN (Persönliche Identifizierungs Nummer) oder über die Eingabe eines biometrischen Merkmals, beispielsweise eines Fingerabdruckes, freigeschaltet wird. Die gleichartige Funktion hat auch die SIM-Karte im Mobilfunkgerät beziehungsweise im Handy, die ebenfalls über PIN oder Biometrie freigeschaltet wird..

Der Erfindung liegt die Aufgabe zugrunde, insbesondere für Personalcomputer ohne Anschluss für einen Smart-Card-Leser ein sicheres Signaturverfahren anzugeben.

Diese Aufgabe wird erfindungsgemäß durch die im unabhängigen Patentanspruch angegebenen Merkmale gelöst.

Im folgenden wird die Erfindung anhand eines Ausführungsbeispieles beschrieben.

Die Erfindung geht aus von einem vornehmlich älteren Personalcomputer, der keine Möglichkeit für einen Anschluss eines Smart-Card-Lesers aufweist. Ein solches Lesegerät wäre aber notwendig, um Signaturen mit einer hohen Sicherheit durchführen zu können.

Bei dem erfindungsgemäßen Signaturverfahren wird ein Hash-Wert für die zu signierenden digitalen Daten auf dem Personalcomputer oder im Netz, beispielsweise in einem SMS-Webserver erzeugt (Short Message Service Kurz-Nachrichtendienst). Dieser Hash-Wert wird beispielsweise über eine SMS-Textnachricht oder aber über eine andere digitale Datenverbindung an ein Mobilfunkgerät beziehungsweise an ein Mobiltelefon des Nutzers geschickt.

Das Mobiltelefon weist sozusagen eine sichere Umgebung für die Erzeugung einer Signatur auf. Dies sind im einzelnen die schon erwähnte SIM-Karte mit weiteren Applikationen, eine Smart Card beziehungsweise ein Smart-Card-Lesegerät, oder eine WEM. Letztlich wird vom Mobilfunkgerät der Hash-Wert signiert und anschließend an den Personalcomputer beispielsweise über e-Mail zurück übertragen.

Bei der Signaturerstellung kann das Datum und/oder die Uhrzeit des Mobiltelefons, die Identifizierungsnummer (IMEI-Nummer) des Mobiltelefons, ein Zertifikat oder eine Zertifikats-ID sowie wie weitere spezifische Daten des Mobiltelefons Verwendung finden. Vor der Absendung der digitalen Signatur kann die Person beziehungsweise der Benutzer die zu signierenden Daten am Display des Mobiltelefons überprüfen, ob jetzt auch tatsächlich der Hash-Wert signiert wird.

Mit dem erfindungsgemäßen Verfahren ist es möglich, auch mit Standard-PC's ohne Hardware- oder Softwareänderungen, sichere Signaturen zu erzeugen. Die hohe Sicherheit ist gewährleistet, da der private Schlüssel die geschützte Umgebung des Mobiltelefons nie verlässt und nie im Personalcomputer vorhanden ist. Die einfache Kontrollmöglichkeit des zu signierenden Hash-Wertes am Mobiltelefon schützt vor Missbrauch.

## Patentansprüche

1. Signaturverfahren, mit einem Personalcomputer und einem Mobilfunkgerät, die beide an einem Kommunikationsnetz angeschaltet sind, bei dem für ein Dokument am Personalcomputer oder im Netz ein Hash-Wert gebildet, dieser zum Mobilfunkgerät übertragen, dort signiert und diese Signatur zum Personalcomputer zurück übertragen wird.

2. Signaturverfahren nach Anspruch 1, bei dem nach auch das Dokument zum Mobilfunkgerät übertragen wird, und nach einer Überprüfung des Hash-Wertes dieser signiert wird.

3. Signaturverfahren nach Anspruch 1 oder 2, bei dem der Datenverkehr mit dem Mobilfunkgerät über einen Kurz-Nachrichtendienst abgewickelt wird.
